# EUROPÄISCHE PATENTSCHRIFT

(11) **EP 0 916 251 B1**
(45) Veröffentlichungstag und Bekanntmachung des Hinweises auf die Patenterteilung: **19.02.2003**
(21) Anmeldenummer: 98120858.0
(22) Anmeldetag: 03.11.1998
(51) Int. Cl.: A01F 12/40

(54) **Häcksler zum Zerkleinern von Halmgut**
Crop chopper
Hacheuse pour produits de récolte

(30) Priorität: 07.11.1997 DE 19749337
(43) Veröffentlichungstag der Anmeldung: 19.05.1999
(73) Patentinhaber: Schrattenecker, Franz, A-4773 Eggerding (AT)
(72) Erfinder: Schrattenecker, Franz, A-4773 Eggerding (AT)
(74) Vertreter: Zinnecker, Armin, Dipl.-Ing.

(56) Entgegenhaltungen:
- EP-A- 0 538 599
- WO-A-87/01903
- WO-A-89/02215
- DE-A- 3 641 796
- DE-A- 19 530 028
- US-A- 4 637 406

## Beschreibung

Die Erfindung betrifft einen Häcksler zum Zerkleinem von Halmgut, vorzugsweise zum Zerkleinern von Stroh hinter dem Schüttlerende eines Mähdreschers, mit einem Häckslergehäuse, in dem ein mit Messern und einem Antrieb versehener Rotor drehbar gelagert ist und das sich unterhalb eines Einlauftrichters befindet, dessen Vorder- und Rückwand auf den Einlaufspalt des Rotors zulaufen und diesen begrenzen, mit einem einen Häckslerboden bildenden Leitblech, in dessen Bereich die Gegenmesser angeordnet sind, und mit einem Auslaß und einer oberhalb von diesem angeordneten Luftauslaßhaube, die an ihren oberen und unteren Kantenbereichen gegenüber dem Einlauftrichter und dem Auslauf durch an den Messerhüllzylinder angestellte Staubleche begrenzt ist.

Ein Strohhäcksler dieser Art ist aus DE 195 30 028 A1 bekannt. Bei diesem bekannten Strohhäcksler wird der in Form eines Mantels den Rotor einfassende und mitrotierende Luftring dadurch gebrochen, daß das unter dem Schüttlerende befindliche und die Rückwand des Einlauftrichters bildende Strohleitblech derart bogenförmig gekrümmt ist, daß das obere gekrümmte Ende unter den Schüttlem liegt, während das untere Ende etwa senkrecht in den Einlauf des Häckslergehäuses ausläuft. Aufgabe der Erfindung ist es, einen Strohhäcksler der eingangs angegebenen Art zu schaffen, bei dem die von dem Rotor erzeugte Umluft noch stärker umgelenkt bzw. gebrochen wird, so daß die Annahme des Strohs von dem Häcksler weiter begünstigt wird.

Erfindungsgemäß wird diese Aufgabe dadurch gelöst, daß in dem Häckslerboden im wesentlichen über die Breite des Rotors verlaufende Schlitze angeordnet sind.

Diese Schlitze bewirken, daß der durch die Verengung des Rotorfliehkreises und die Gegenschneiden erzeugte Aufwind durch die Schlitze im Einlaufbereich des Strohs nach außen gelenkt bzw. gebrochen wird. Auf diese Weise wird anstelle eines die Annahme des Strohs behindernden Aufwinds eine Saugwirkung durch die Rotation des Rotors erreicht.

Der störende Aufwind kann zusätzlich dadurch verhindert werden, daß im Bereich des Häckslerbodens die Luftströmung brechende Körper angeordnet sind.

Diese Körper können ein stufenförmiges Profil besitzen.

Nach einer bevorzugten Ausführungsform der Erfindung ist vorgesehen, daß die Haube zwischen ihren oberen und Kantenbereichen, die mit an den Messerhüllzylinder angestellten Staublechen versehen sind, mit mindestens einem frontseitigen Austrittsfenster für Luft versehen ist.

Ein Ausführungsbeispiel der Erfindung wird nachstehend anhand der Zeichnung näher erläutert. In dieser zeigt
- Fig. 1: eine erste Ausführungsform eines erfindungsgemäßen Häckslers im schematischen Querschnitt,
- Fig. 2: eine der Fig. 1 entsprechende Darstellung einer zweiten Ausführungsform der Erfindung und
- Fig. 3: eine Ansicht der Häcksler nach den Fig. 1 und 2 in Richtung des Pfeils A in Fig. 2.

Unter dem Ende eines Schüttlers 1 eines Mähdreschers ist das trichterförmige Einlaufgehäuse für das Stroh angeordnet, dessen vordere Wand 2 und hintere Wand 3 auf das Häckslergehäuse 4 zulaufen und den von dem Rotor 5 überstrichenen Einlaufbereich in das Häckslergehäuse begrenzen. Auf dem Mantel des in Richtung des Pfeils 6 rotierenden Rotors sind in üblicher Weise Messer 7 angeordnet, deren Messerhalteplatten 8 fest oder um die Achsen 9 schwenkbar an dem Rotormantel 5 gehaltert sein können.

Im Auslaufbereicht des Häckslergehäuses ist ein Messerbalken 10 gehäusefest angeordnet, in dem mit den Messern 7 zusammenwirkende Gegenmesser 11 gehaltert sind.

Der Bereich zwischen der Trichterwandung 3 und dem Messerbalken 10 ist durch den Häckslerboden 12, der ein Teil des Häckslergehäuses 4 bildet, geschlossen. Der Häckslerboden ist über die Breite des Rotors 5 mit Schlitzen zum Durchtritt von Luft versehen.

Oberhalb des Auslasses 13 des Häckslergehäuses ist eine Haube 14 angeordnet, die an ihrem oberen Ende mit einem Staublech 15 und an ihrem unteren Ende mit einem Staublech 16 versehen ist, die in der dargestellten Weise an den von den Messern 7 überstrichenen Messerhüllzylindern 17 angestellt ist. Die Haube ist auf ihrer Vorderseite mit einem Durchbruch 18 versehen, aus dem Luft störungsfrei austreten kann.

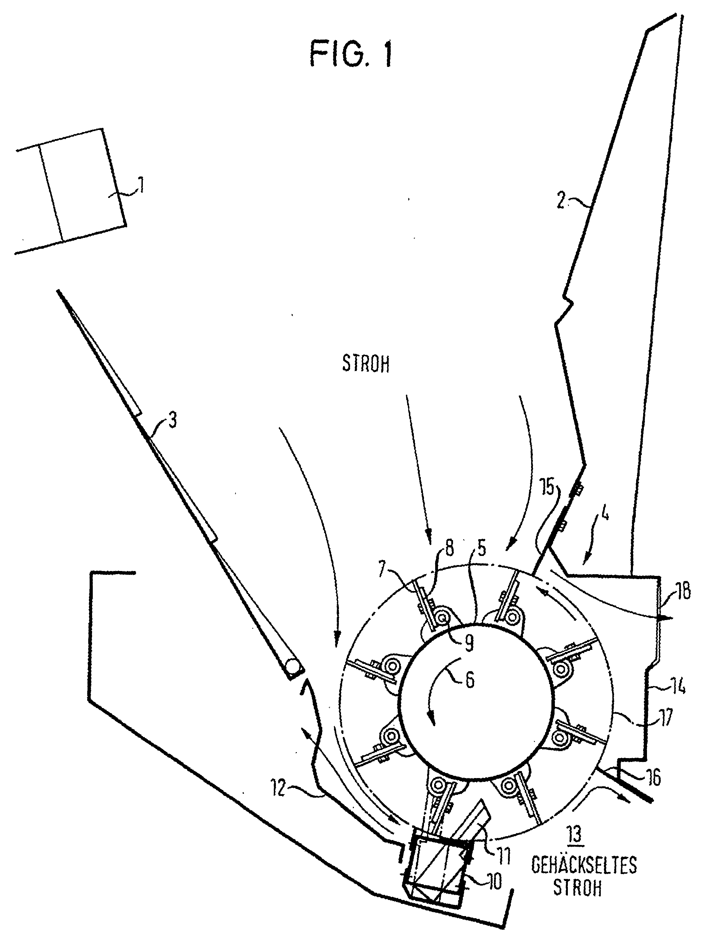

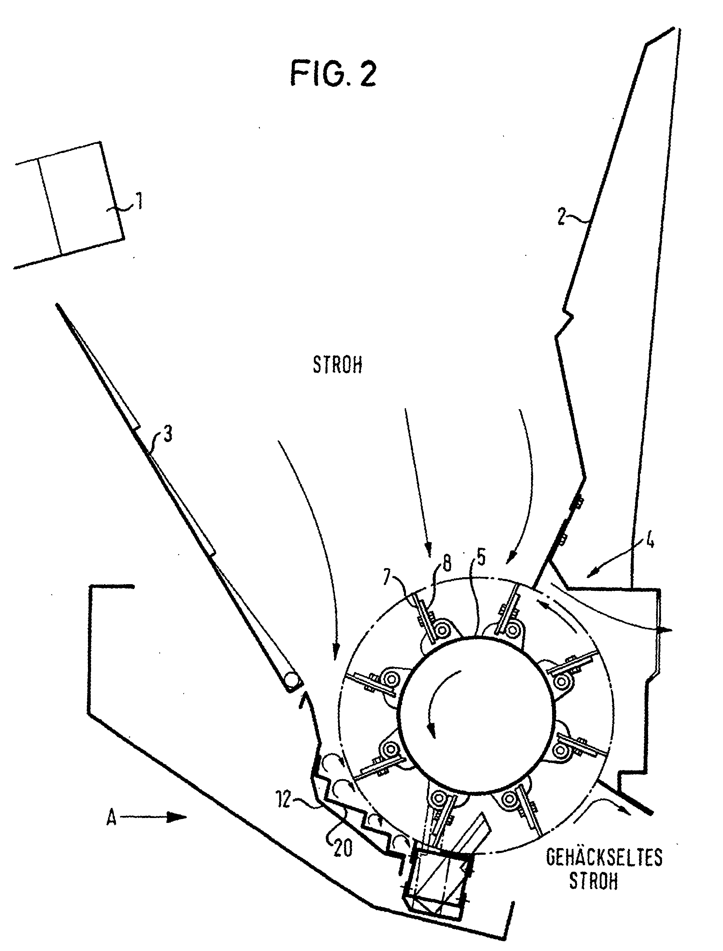

Das Ausführungsbeispiel nach Fig. 2 unterscheidet sich von dem nach Fig. 1 nur dadurch, daß in dem Häckslerboden 12 stufenartig Staubleche 20 angeordnet sind, die den störenden Aufwind zusätzlich brechen und verwirbeln.

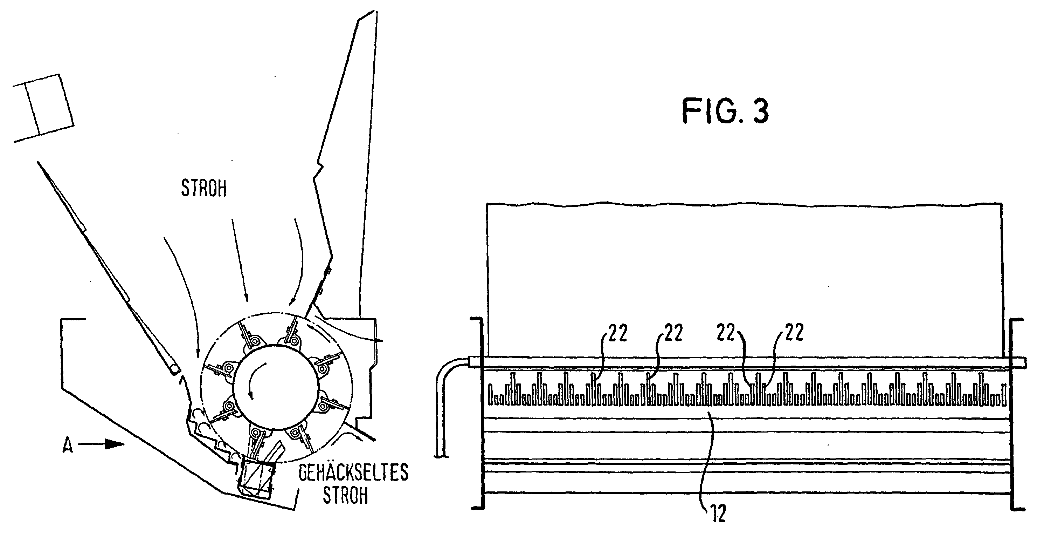

Aus Fig. 3 ist eine Rückansich des Häckslers in Richtung des Pfeils A ersichtlich. In dem Häckslerboden 12 sind dicht nebeneinander liegend vertikale Schlitze 22 unterschiedlicher Länge angeordnet, die dem Luftaustausch bzw. dem Luftaustritt dienen.

## Patentansprüche

1. Häcksler zum Zerkleinem von Halmgut, vorzugsweise zum Zerkleinern von Stroh hinter dem Schüttlerende eines Mähdreschers,
mit einem Häckslergehäuse, in dem ein mit Messern und einem Antrieb versehener Rotor drehbar gelagert ist und das sich unterhalb eines Einlauftrichters befindet, dessen Vorder- und Rückwand auf den Einlaufspalt des Rotors zulaufen und diesen begrenzen,
mit einem einen Häckselboden bildenden Leitblech, in dessen Bereich die Gegenmesser angeordnet sind, und
mit einem Auslaß und einer oberhalb von diesem angeordneten Luftauslaßhaube, die an ihren oberen und unteren Kantenbereichen gegenüber dem Einlauftrichter und dem Auslauf durch an den Messerhüllzylinder angestellte Staubleche begrenzt ist,
**dadurch gekennzeichnet,**
**daß** in dem Häckslerboden im wesentlichen über die Breite des Rotors verlaufende Schlitze angeordnet sind.

2. Häcksler nach Anspruch 1, **dadurch gekennzeichnet, daß** im Bereich des Häckslerbodens die Luftströmung brechende Körper angeordnet sind.

3. Häcksler nach Anspruch 2, **dadurch gekennzeichnet, daß** die Körper ein stufenförmiges Profil besitzen.

4. Häcksler nach einem der Ansprüche 1 bis 3, **dadurch gekennzeichnet, daß** die Haube zwischen ihren oberen und unteren Kantenbereichen, die mit an den Messerhüllzylinder angestellten Staublechen versehen sind, mit einem Austrittsfenster für Luft versehen ist.

## Claims

1. A chopper for comminuting stalks, preferably for comminuting straw behind the shaker end of a harvester-thresher, comprising
a chopper housing, in which a rotor provided with knives and a drive is rotatably mounted, and which is disposed below a feeding hopper whose front and rear walls extend towards the feeding gap of the rotor and define the same,
a guide plate forming the chopper bottom, in the vicinity of which guide plate the counter-knives are disposed, and
an outlet and an air outlet hood disposed above the same, which at its upper and lower edge portions opposite the feeding hopper and the outlet is defined by baffle plates set against the external knife cylinder,
**characterized in**
**that** in the chopper bottom slots are disposed, which substantially extend across the width of the rotor.

2. The chopper as claimed in claim 1, **characterized in that** bodies breaking the air flow are disposed in the vicinity of the chopper bottom.

3. The chopper as claimed in claim 2, **characterized in that** the bodies have a stepped profile.

4. The chopper as claimed in any of claims 1 to 3, **characterized in that** between its upper and lower edge portions, which are provided with baffle plates set against the external knife cylinder, the hood is provided with an outlet window for air.

## Revendications

1. Hacheuse pour fragmenter des chaumes, de préférence pour fragmenter de la paille en arrière de l'extrémité du secoueur d'une moissonneuse-batteuse,
comportant un boîtier de hacheuse dans lequel est monté mobile en rotation un rotor pourvu de couteaux et d'un entraînement et qui se trouve au-dessous d'un entonnoir d'entrée dont les parois antérieure et postérieure convergent vers l'intervalle d'entrée du rotor et délimitent celui-ci,
comportant une tôle directrice formant un fond de hacheuse, dans la zone de laquelle sont agencés les couteaux complémentaires, et
comportant une sortie et une coiffe de sortie d'air qui est agencée au-dessus de celle-ci et qui, au niveau de ses zones d'arête supérieure et inférieure, est délimitée par rapport à l'entonnoir d'entrée et à la sortie par des tôles de refoulement positionnées contre le cylindre externe à couteaux,
**caractérisée en ce que**
des fentes s'étendant sensiblement sur toute la largeur du rotor sont ménagées au fond de la hacheuse.

2. Hacheuse selon la revendication 1, **caractérisée en ce que** dans la zone du fond de la hacheuse sont agencés des corps réfractant l'écoulement d'air.

3. Hacheuse selon la revendication 2, **caractérisée en ce que** les corps possèdent un profil en gradins.

4. Hacheuse selon l'une des revendications 1 à 3, **caractérisée en ce que** la coiffe est pourvue, entre ses zones d'arête supérieure et inférieure pourvues des tôles de refoulement positionnées contre le cylindre externe à couteaux, d'une fenêtre de sortie pour l'air.
